# EUROPÄISCHE PATENTANMELDUNG

(11) **EP 1 316 334 A1**
(43) Veröffentlichungstag der Anmeldung: **04.06.2003**
(21) Anmeldenummer: 02025957.8
(22) Anmeldetag: 21.11.2002
(51) Int. Cl.: A63B 55/08

(54) **Golfwagen**

(30) Priorität: 29.11.2001 DE 10158546
(71) Anmelder: Kiffe Engineering GmbH, 78048 Villingen-Schwenningen (DE)
(72) Erfinder: Kiffe, Horst Gregor, 78048 Villingen-Schwenningen (DE)
(74) Vertreter: Patentanwälte Westphal, Mussgnug & Partner

(57) **Zusammenfassung**

Die Erfindung betrifft einen motorisch angetriebenen Golfwagen, der nicht nur zum Transport von Golfschlägern sondern auch des Golfspielers geeignet ist und alternativ auch laufend vom Golfspieler bedient werden kann.

Zu diesem Zweck ist die Lenkstange (17) aus einer nach hinten gerichteten in eine nach vorn gerichtete Position verdrehbar und mit der das Vorderrad (20) tragenden Gabelachse (16) drehfest verbunden bzw. verbindbar.

## Beschreibung

Die Erfindung betrifft einen motorisch angetriebenen Golfwagen der im Oberbegriff des Anspruchs 1 angegebenen Art.

Auf Golfplätzen werden zunehmend elektromotorisch angetriebene Golfwagen verwendet, die ausschließlich dem Transport des Sportgerätes, also im wesentlichen des Golfsackes mit den Schlägern, dienen. Ein derartiger Golfwagen ist zum Beispiel aus EP 0 447 684 B1 bekannt.

Ferner kommen motorisch angetriebene Golfwagen zum Einsatz, mit welchen außer dem Sportgerät ein oder mehrere Golfspieler transportiert werden.

Derartige Golfwagen sind zum einen in der Anschaffung kostspielig und zum anderen für den Transport mit einem Pkw ungeeignet, da sie anders als oben genannte Golfwagen nicht zusammenlegbar, vielmehr zu sperrig sind.

In jüngerer Zeit ist ein Golfwagen auf den Markt gekommen, welcher vom Spieler sowohl in sitzender Position als auch im Laufen bedient werden kann. Dieser Golfwagen ist vor allem für Spieler gedacht, welche aus Gesundheits- oder Altersgründen nicht mehr in der Lage sind, die langen Strecken auf einem Golfplatz zu Fuß zurückzulegen.

Nachteil dieses Golfwagens ist, dass das Lenkgestänge ausgetauscht werden muss, um das Fahrzeug umzurüsten.

Damit ist es nicht ohne weiteres möglich, während des Spieles aus der sitzenden Position in die laufende Position zu wechseln.

Der vorliegenden Erfindung liegt die Aufgabe zugrunde, einen motorisch angetriebenen Golfwagen zu schaffen, der sowohl sitzend als auch laufend vom Spieler benutzt werden kann.

Gelöst wird diese Aufgabe mit den Merkmalen des Anspruchs 1.

Aus GB 2 242 404 A ist zwar ein Golfwagen der im Oberbegriff des Anspruchs 1 genannten Art bekannt, dessen Lenkgestänge eine etwa horizontal verlaufende Lenkstange aufweist, welche mit dem oberen Ende der Gabelachse drehfest, aber um eine senkrecht zur Gabelachse verlaufende Achse etwa 90° bis 180° schwenkbar verbunden ist, wobei die Gabelachse mindestens um 180° verdrehbar ist. Dabei ist die Lenkstange so bemessen, dass sie alternativ von einem Fahrerstandplatz aus oder nach einer Schwenkung von etwa 90° bis 180° um eine horizontale Achse von dem vor dem Golfwagen laufenden Benutzer bedienbar ist.

Diese bekannte Lösung hat jedoch den Nachteil, dass der zunächst auf dem Wagen stehende Benutzer beim Übergang in den Laufbetrieb den Lenker kurzfristig loslassen und umgreifen muß.

Dieser Nachteil wird nach der Grundidee des erfindungsgemäßen Vorschlages dadurch vermieden, dass die Lenkstange mit dem oberen Ende der Gabelachse drehfest verbunden bzw. verbindbar und um etwa 360° frei verdrehbar ist, wobei die Lenkstange so bemessen ist, dass sie alternativ vom Fahrersitz aus oder nach Drehung um etwa 180° von dem vor dem Golfwagen laufenden Benutzer ohne Umgreifen bedienbar ist.

Damit kann der Spieler während des Fahrens vom Fahrzeug absteigen und den Wagen ohne Umrüsten des Lenkgestänges im Laufen steuern, wobei er den Steuergriff nicht loslassen muss und damit die Kontrolle über den Wagen behält.

Die oben genannte Grundidee lässt sich auf zwei verschiedene Weisen realisieren, die mit den Ansprüchen 2 und 3 angegeben sind.

Nach dem Vorschlag gemäß Anspruch 2 ist die Lenkstange immer mit dem oberen Ende der Gabelachse drehfest verbunden, wobei die Gabelachse um etwa 360° frei verdrehbar ist.

Soweit die freie Verdrehbarkeit der Gabelachse um 360° nicht gewünscht oder nicht zulässig ist, ist die Lösung nach Anspruch 3 im Sinne der Erfindung möglich, bei welcher die Lenkstange gegenüber der Gabelachse um 180° verdrehbar und in diesen beiden Winkelstellungen mit der Gabelachse fest verbindbar ist. In diesem Fall braucht die Gabelachse selbst nur um etwa 180° verdrehbar zu sein, um den mit der Erfindung ermöglichten Vorteil zu erreichen.

Konstruktiv ist dieser Vorschlag gemäß Anspruch 4 dadurch realisiert, dass an der Gabelachse eine Rastscheibe mit zwei um 180° gegeneinander versetzten Rasten vorgesehen ist und die Lenkstange mit einem in die Rasten eingreifenden, manuell betätigbaren Raststift versehen ist. Mit dieser Rasteinrichtung lassen sich Lenkstange und Gabelachse in beiden gewünschten Positionen fest miteinander verbinden.

Die Handhabung des erfindungsgemäßen Golfwagens wird dadurch besonders erleichtert, dass in an sich bekannter Weise wie bei einem Fahrrad bzw. Motorrad an der Lenkstange ein quer und zur Mitte zu dieser angeordneter Lenker vorgesehen ist, an welchem gemäß Anspruch 6 ein Drehgriff zur Steuerung der Drehzahl des Motors angeordnet ist.

Nach dem Vorschlag gemäß Anspruch 7 kann der Golfwagen schließlich auch mit einer Fernsteuerung ausgestattet sein, so dass bei seiner Benutzung durch den laufenden Golfspieler Antrieb und Steuerung mittels eines Handsenders durch Funk, Ultraschall oder dergleichen gesteuert werden können.

Der Gegenstand der Erfindung ist nachstehend anhand zweier in der Zeichnung dargestellter Ausführungsbeispiele im Einzelnen erläutert.

In den Zeichnungen zeigen:
- Figur 1: ein erstes Ausführungsbeispiel eines erfindungsgemäßen Golfwagens in schematischer Darstellung,
- Figur 2: die Aufsicht des Golfwagens gemäß Figur1
- Figur 3: ein zweites Ausführungsbeispiel eines erfindungsgemäßen Golfwagens in schematischer Darstellung und
- Figur 4: die Aufsicht des Golfwagens gemäß Figur 3.

In den Zeichnungen sind nur die für das Verständnis der Erfindung wichtigen und notwendigen Elemente dargestellt. Ziffern mit Strichindizes bezeichnen dasselbe Bauteil in einer anderen Position. Im Übrigen sind gleiche Bauteile bei den beiden Ausführungsbeispielen mit gleichen Ziffern bezeichnet.

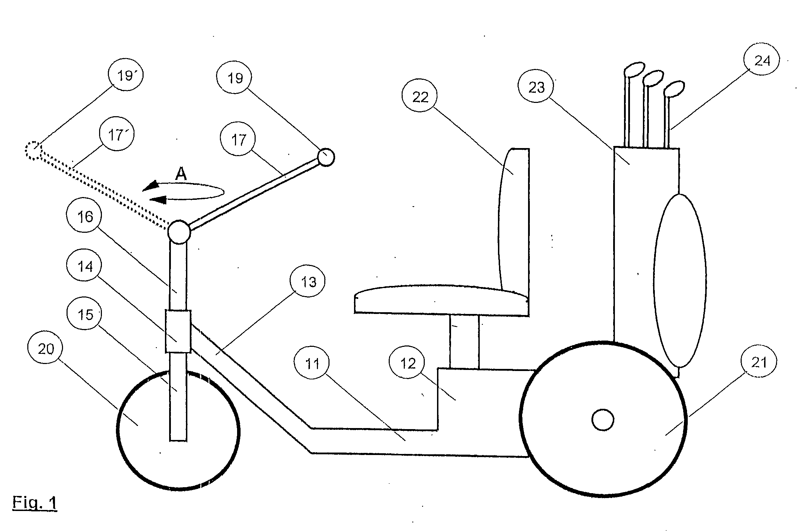

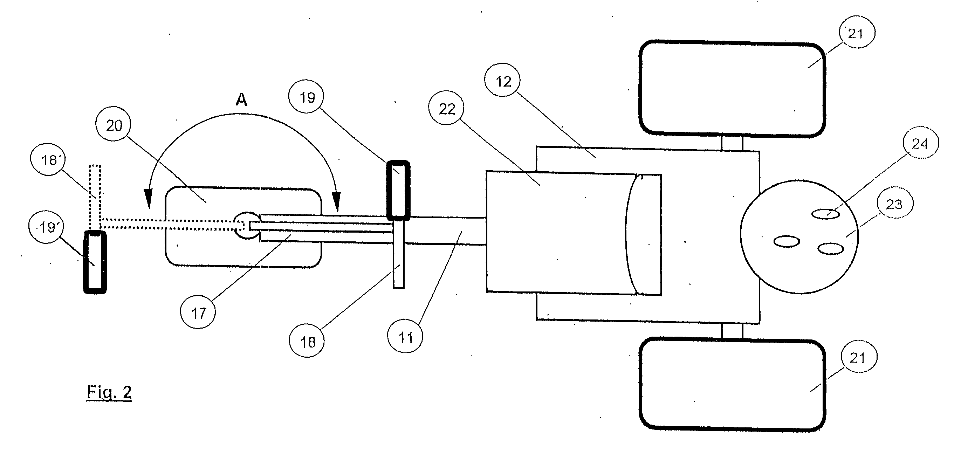

Der erfindungsgemäße Golfwagen gemäß Figur 1 und 2 weist ein Fahrgestell 10 auf, dessen in Fahrtrichtung verlaufender Mittelträger 11 den hinten gelegenen Fahrerschemel 12 über einen vorderen Lenkgestängeträger 13 mit dem Gabellager 14 verbindet.

Am Fahrerschemel 12, in welchem die nicht dargestellte Antriebseinheit, bestehend aus Elektromotor, Getriebe und Batterie, untergebracht ist, sind die angetriebenen Hinterräder 21 gelagert. Der Fahrerschemel 12 trägt ferner den Fahrersitz 22 sowie eine nicht dargestellte Halterung für die Golftasche 23 mit den Golfschlägern 24.

Das nicht angetriebene Vorderrad 20 ist an der schematisch dargestellten Radgabel 15 frei drehbar angebracht, deren Gabelachse 16 im Gabellager 14 gelagert ist.

Das Lenkgestänge, bestehend aus Lenkstange 17 und Lenker 18, ist fest mit dem oberen Ende der Gabelachse 16 verbunden. Wie mit dem Doppelpfeil A angedeutet ist, läßt sich die Gabelachse 16 mit dem Lenkgestänge um 360° verdrehen, so dass das zum Beispiel zunächst nach hinten in Richtung auf den Fahrersitz weisende Lenkgestänge in die punktiert dargestellte, nach vorn gerichtete Position 17', 18' verdreht werden kann.

Diese Anordnung ermöglicht es, dass der Golfwagen entweder von einem auf dem Sitz 22 sitzenden Spieler oder von dem vor dem Golfwagen in Fahrtrichtung laufenden Spieler bedient werden kann. Der Spieler kann also während des Golfspiels je nach Wunsch, Gelände bzw. Kondition auf dem Golfwagen mitfahren oder diesen im Laufen bedienen. Bei diesem Wechsel braucht er den Drehgriff 19 nicht loszulassen, so dass für ihn die Drehrichtung des Drehgriffes in Position 19 und 19' erhalten bleibt.

Nach einem weiteren Vorschlag ist der Golfwagen mit einer Fernsteuereinrichtung ausgestattet, so dass der Benutzer den Motorantrieb sowie die Lenkung mittels eines drahtlosen Senders steuern kann. In diesem Fall muss dem Lenkgestänge ein an sich bekannter Servoantrieb zugeordnet sein.

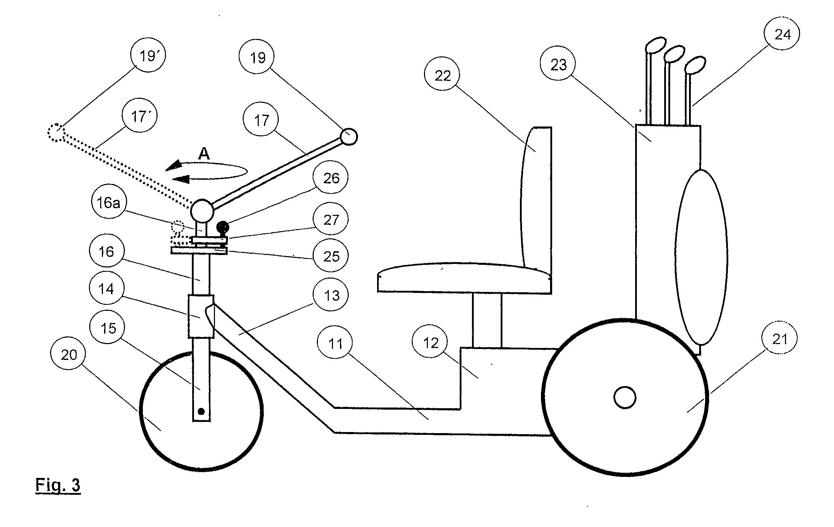

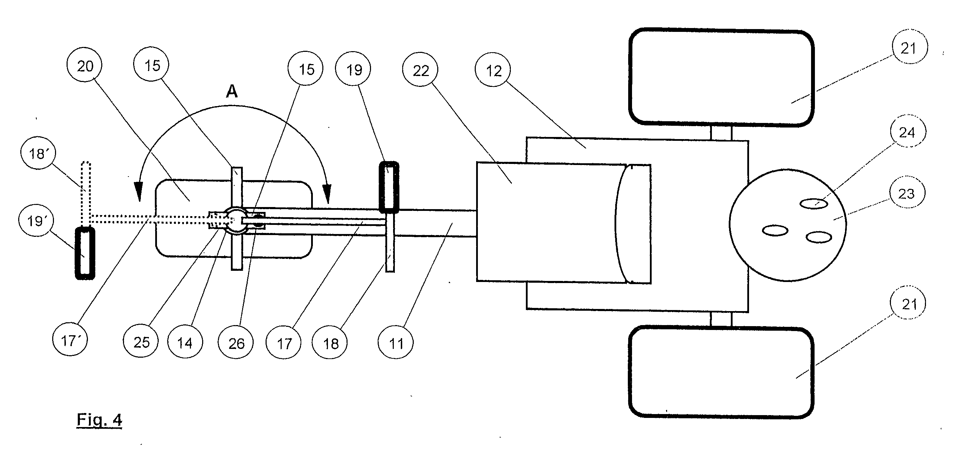

Das zweite Ausführungsbeispiel gemäß Figur 3 und 4 unterscheidet sich von dem ersten lediglich durch die Verbindung des Lenkgestänges 17, 18 mit der Gabelachse 16. Hierbei ist die Lenkstange 17 nur mit einem Achsstücke 16a drehfest verbunden, das seinerseits an der Gabelachse 16 drehbar gelagert ist. Die Gabelachse 16 weist an ihrem dem Achsstück 16a zugewandten Ende eine Rastscheibe 25 mit zwei um 180° gegeneinander versetzten Rasten auf. Am Achsstück 16a ist mittels einer Brücke 27 ein gegen die Rastscheibe 25 verschiebbarer Raststift 26 vorgesehen, welcher in den beiden um 180° gegeneinander versetzten Positionen in die Rastaufnahmen eingreift und damit das Lenkgestänge in den beiden Positionen fest an die Gabelachse 16 kuppelt.

Diese Konstruktion ermöglicht wie bei dem ersten Ausführungsbeispiel die vollständige Drehung des Lenkgestänges um 360°, wobei die Gabelachse 16 mit dem Vorderrad 20 insgesamt nur eine Drehung von 180° durchführt.

Die bei dem ersten Ausführungsbeispiel genannten Vorteile der beiden Betriebsarten sind bei diesem Ausführungsbeispiel in gleicher Weise realisierbar, wobei die möglicherweise unzulässige bzw. nicht gewünschte Verdrehung der Gabelachse um 360° vermieden ist.

### Bezugszeichenliste

- 10: Fahrgestell
- 11: Mittelträger
- 12: Fahrerschemel
- 13: Lenkgestängeträger
- 14: Gabellager
- 15: Radgabel
- 16: Gabelachse
- 16a: Achsstück
- 17: Lenkstange
- 18: Lenker
- 19: Drehgriff
- 20: Vorderrad
- 21: Hinterrad
- 22: Fahrersitz
- 23: Golftasche
- 24: Golfschläger
- 25: Rastscheibe
- 26: Raststift
- 27: Brücke

## Patentansprüche

1. Golfwagen mit einem Fahrgestell (10), an dem ein Fahrersitz (22), zwei von einem Motor, vorzugsweise einem Elektromotor, angetriebene Hinterräder (21) und ein an einer Radgabel (15) drehbar gelagertes Vorderrad (20) vorgesehen sind, wobei die Radgabel (15) mittels einer Gabelachse (16) im vorderen Bereich des Fahrgestells (10) gelagert und mittels eines Lenkgestänges (17, 18) verdrehbar ist,
**dadurch gekennzeichnet, dass** das Lenkgestänge eine etwa horizontal verlaufende Lenkstange (17) aufweist, welche mit dem oberen Ende der Gabelachse (16) drehfest bzw. verdrehbar verbunden und um etwa 360° frei verdrehbar ist, wobei die Lenkstange (17) so bemessen ist, dass sie alternativ vom Fahrersitz (22) aus oder nach einer Drehung um etwa 180° von dem vor dem Golfwagen laufenden Benutzer bedienbar ist.

2. Golfwagen nach Anspruch 1, bei welchem die Lenkstange (17) mit dem oberen Ende der Gabelachse (16) drehfest verbunden ist,
**dadurch gekennzeichnet, dass** die Gabelachse (16) etwa um 360° frei verdrehbar ist.

3. Golfwagen nach Anspruch 1,
**dadurch gekennzeichnet, dass** die Lenkstange (17) gegenüber der Gabelachse (16) um 180° verdrehbar und in diesen beiden Winkelstellungen mit der Gabelachse (16) fest verbindbar ist, so dass die Gabelachse (16) um etwa 180° frei verdrehbar ist.

4. Golfwagen nach Anspruch 4,
**dadurch gekennzeichnet, dass** an der Gabelachse (16) eine Rastscheibe (25) mit zwei um 180° versetzten Rasten vorgesehen ist und die Lenkstange (17) mit einem in die Rasten eingreifenden, manuell betätigbaren Raststift (26) versehen ist.

5. Golfwagen nach einem der Ansprüche 1 bis 4,
**dadurch gekennzeichnet, dass** an der Lenkstange (17) ein quer und
symmetrisch zu dieser angeordneter Lenker (18) vorgesehen ist.

6. Golfwagen nach einem der Ansprüche 1 bis5,
**dadurch gekennzeichnet, dass** am Lenker (18) ein Drehgriff (19) zur Steuerung der Drehzahl des Motors angeordnet ist.

7. Golfwagen nach einem der Ansprüche 1 bis 6,
**gekennzeichnet durch** einen am Golfwagen vorgesehenen Empfänger, einer Fernsteuereinrichtung zur Steuerung des Motorantriebs sowie eines dem Lenkgestänge zugeordneten Servomotors und ferner **gekennzeichnet durch** einen vom Benutzer zu bedienenden, drahtlosen Sender für die Fernsteuerung.
